# NEW EUROPEAN PATENT SPECIFICATION

(11) **EP 0 184 418 B2**
(45) Date of publication and mention of the opposition decision: **03.01.1996**
(45) Mention of the grant of the patent: 11.09.1991
(21) Application number: 85308762.5
(22) Date of filing: 02.12.1985
(51) Int. Cl.: H02K 23/30

(54) **D.C. rotary electrical machine**
Elektrische Gleichstromdrehmaschine
Machine électrique rotative à courant continu

(30) Priority: 30.11.1984 JP 182903/84 U
(43) Date of publication of application: 11.06.1986
(73) Proprietor: MITSUBISHI DENKI KABUSHIKI KAISHA, Tokyo 100 (JP)
(72) Inventor: Gotou, Takeo c/o Himeji Works, Himeji City Hyogo Prefecture (JP)
(74) Representative: Mounteney, Simon James

(56) References cited:
- EP-A- 0 157 698
- DE-C- 452 730
- US-A- 1 910 321
- PATENT ABSTRACTS OF JAPAN, vol. 4, no. 175 (E-36)[657], 3rd December 1980; & JP-A-55 122 167 (SEKOH GIKEN K.K.) 20-09-1980

## Description

This invention relates to direct current rotary electrical machines such as motors or generators, and more particularly to an improvement in the rectification thereof.

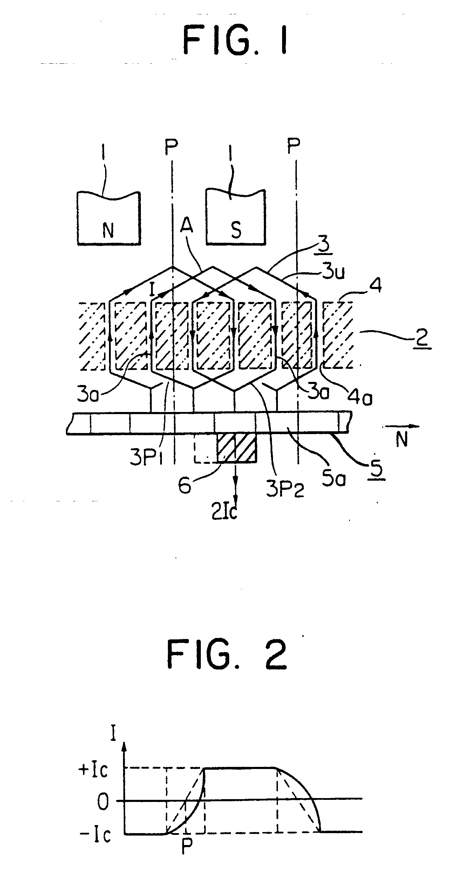

A direct current motor will be explained as one example of a conventional generally known direct current rotary electrical machine in reference to Fig. 1 (a developmental view of an electric circuit thereof) and Fig. 2. In the drawings, a field magnetic pole 1 comprising a permanent magnet is disposed opposite an armature 2 which is comprised of armature windings 3, an armature core 4, a commutator 5 etc., as disclosed below. The symbol P denotes a magnetic neutral plane. The armature windings 3 is provided by unit coils A lap wound a predetermined number of turns having a pair of coil sides 3a and coil ends 3P₁, 3P₂, 3u disposed within a slot of armature core 4. The commutator 5 comprises a plurality of commutator segments 5a, and two coil ends (3P₁, 3p₂) opposite to the pole 1 of the unit coils A of the armature windings are individually connected to two corresponding segments. A brush 6 is in rubbing contact with the commutator 5.

In the conventional machine as constructed above, when the armature winding 3 is energized through the brush 6, a current I flows to each of the coil pieces 3a in the direction of the arrows and the armature 2 is rotated in direction N by the electromagnetic operation between the field flux from the permanent magnet 1 and the field flux due to the current flowing to the coil of the armature 2.

Referring to the rectification based on the unit coil (A) as shown by the solid line in Fig. 2, the current amount thereof changes between -Ic and + Ic according to the change of contact area between each of the commutator segments 5a and the brush 6 in accordance with the revolution of the armature 2.

Here, the reference symbol P shows the timing point where a pair of the coil sides 3a are positioned on the magnetic neutral plane. Ideally, it is desirable that the current value be in the vicinity of zero at this point P as shown by the dashed line in Fig. 2. However, primarily because of such factors as the self inductance of the unit coils A, in reality this is delayed as shown by the solid line in Fig. 2 so that the torque and output characteristics, etc. are reduced.

So, in the related art, the position of the brush 6 in relation to the field magnetic pole is shifted, for example, as depicted by the dotted line of Fig. 1. This results in the following demerits. Namely, since the direction of shift of the brush etc. in relation to the field magnetic pole differs according to such factors as the direction of rotation of the armature, or whether the machine is a motor of a generator, two kinds of fixing members holding the brush etc., must be prepared in accordance with the direction of shift of the brush 6 and the two types cannot be used in place of one another and further, if an interchangeable part is attempted to be manufactured it would have to be increased in size due to problems with the positional relation with other parts resulting in the disadvantage that the machine becomes large in size.

United States Patent Specification 1910321 discloses a D.C. rotary electrical machine in which the connections of the armature coils to the commutator segments are made to the segments which are positioned approximately opposite the side where the associated coils begin or end. This results in the sensor line of the armature coils being circumferentially advanced in relation to the centre line of the segments to which the coil is connected. The connection of one side of the armature coil with a segment to which it is connected extends from the side and into the segments in a straight line.

European Patent Specification 0157698 which falls within the terms of articles 54 (3) and 89 EPC also discloses a D.C. electric motor in which the centre between the commutator segments and the centre of the coil sides are shown by a predetermined angle. However, as with the machine disclosed in the United States Patent Specification referred to above, one of the coil sides extends directly into the commutator segment in a straight line. The features defined in the precharacterizing portion of claim 1 are known from a technical article relating to a conference held in Stuttgart in April 1974. The article is : Technische Akademie Esslingen (Institut des Kontaktstudiums an der Universität Stuttgart, 5 April 1974, entitled "Kleine elektrische Maschinen und Geräte, Teil IV".

An object of the invention is to provide a D.C. rotary electric machine in which the magnetic neutral plane is positioned where the value of the current flowing to unit coils of the armature winding is zero.

According to the present invention there is provided an A D.C. rotary electric machine comprising a stator including magnetic poles, and an armature rotatable relative to the stator and including an armature winding comprising a plurality of unit coils shifted from one another by a predetermined electrical angle, and a commutator having a plurality of commutator segments, each of the unit coils having a pair of coil sides and being connected between two commutator segments; wherein the unit coils are so positioned with respect to the commutator segments that a centre line parallel to the rotation axis, through the mid point between the commutator segments to which a unit coil is connected, is circumferentially advanced by a predetermined angle from the centre line parallel to the rotation axis, through the mid point between the coil sides of the unit coil connected to those commutator segments. and each of the coil sides are connected to their respective commutator segments via respective portions of the coil winding which are angle with respect to the coil sides, characterised in that the apex of each unit coil is circumferentially advanced by the said predetermined angle from the centre line parallel to the rotation axis through the mid point between the coil sides of the unit coil.

The D.C. machine of the invention has excellent electrical characteristics and a simple construction.

The invention will be further described with reference to the accompanying drawings in which:-

Figure 1 is a developed view showing a conventional machine.

Figure 2 is a rectification curve of current flowing to the armature windings of Figure 1.

Figure 3 is a developed view showing an embodiment of this invention.

Figure 4 is a rectification curve of current flowing to the armature windings of Figure 3.

Figure 5 is a developed view showing another embodiment of this invention.

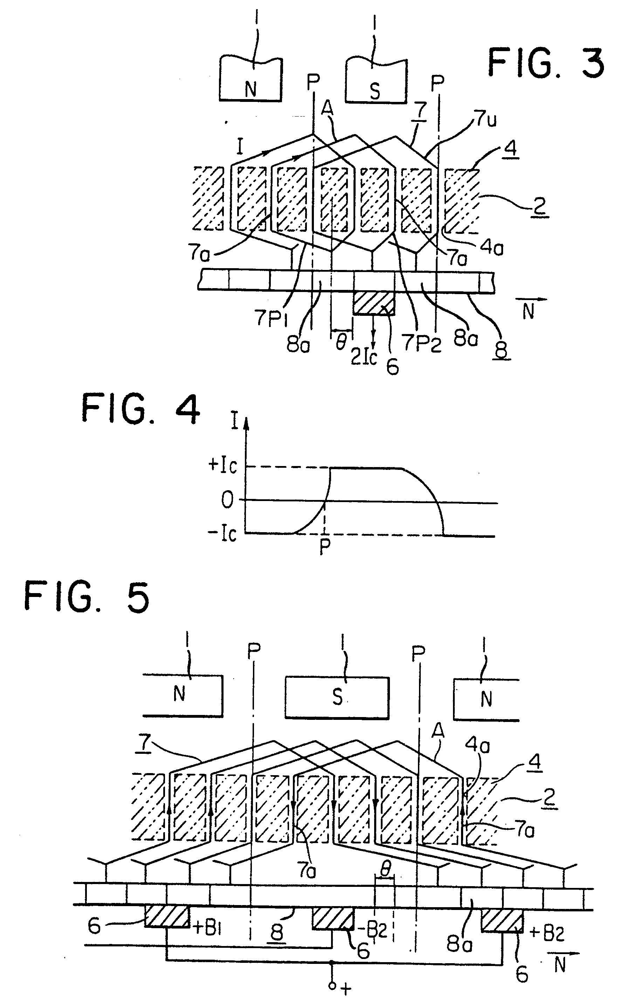

An embodiment of this invention will be explained below with reference to Figures 3 and 4. In the drawings, an armature winding 7 comprises a plurality of unit coils A which have coil sides 7a and coil ends 7p₁, 7p₂, 7u. The coil ends 7P₁, 7P₂ are connected to two corresponding commutator segments 8a. The armature winding 7 is wound in a lap style and is disposed so that the central position between a pair of coil sides 7a of each coil thereof is circumferentially disposed by an angle relative to the center between the corresponding pair of commutator segments 8a.

The other elements are the same as that of a conventional machine, so an explanation thereof will be omitted.

In the above construction, since the pair of commutator segments 8a are advancedly displaced by an angle (θ) in the rotating direction relative to the coil sides 7a the value of the current 1 becomes zero at the point P in Fig. 4. Namely, the current I flowing to the armature winding is approximately zero at the point P of the magnetic neutral plane. Here, as it can easily be realized to circum-ferencially displace the armature windings 7 relative to a commutator 8 in a manufacturing process without regard to the direction of displacement it is possible to apply one part for another and also to use general parts in replacement thereof.

Fig. 5 shows another embodiment of this invention. In the drawing, the armature windings are wave-wound. This configuration of Fig. 5 also has the same advantageous effects as the above embodiment in Fig. 3.

## Claims

1. A D.C. rotary electric machine comprising a stator including magnetic poles (1), and an armature (2) rotatable relative to the stator and including an armatur winding (7) comprising a plurality of unit coils (A) shifted from one another by a predetermined electrical angle, and a commutator (8) having a plurality of commutator segments (8a), each of the unit coils having a pair of coil sides (7a) and being connected between two commutator segments; wherein the unit coils (A) are so positioned with respect to the commutator segments (8a) that a centre line parallel to the rotation axis, through the mid point between the commutator segments (8a) to which a unit coil (A) is connected, is circumferentially advanced by a predetermined angle (θ) from the centre line parallel to the rotation axis, through the mid point between the coil sides (7a) of the unit coil connected to those commutator segments, and each of the coil sides (7a) are connected to their respective commutator segments via respective portions of the coil winding which are angled with respect to the coil sides, characterised in that the apex of each unit coil is circumferentially advanced by the said predetermined angle (θ) from the centre line parallel to the rotation axis through the mid point between the coil sides (7a) of the unit coil.

2. A D.C. rotary machine as claimed in claim 1, in which the armature winding is lap-wound.

3. A D.C. rotary machine as claimed in claim 1, in which the armature is wave-wound.

## Patentansprüche

1. Rotierende elektrische Gleichstrommaschine, umfassend: einen Stator mit Magnetpolen (1) und einen Anker (2), der relativ zu dem Stator drehbar ist und eine Ankerwicklung (7) aufweist, die eine Vielzahl von voneinander um einen vorbestimmten Phasenwinkel verschobenen Spuleneinheiten (A) aufweist, und einen Kommutator (8) mit einer Vielzahl von Kommutatorsegmenten (8a), wobei jede der Spuleneinheiten ein Paar von Spulenseiten (7a) hat und zwischen zwei Kommutatorsegmente geschaltet ist; wobei die Spuleneinheiten (A) relativ zu den Kommutatorsegmenten (8a) so positioniert sind, daß eine zur Drehachse parallele Mittellinie durch den Mittelpunkt zwischen den Kommutatorsegmenten (8a), mit denen eine Spuleneinheit (A) verbunden ist, in Umfangsrichtung um einen vorbestimmten Winkel (Θ) von der zur Drehachse parallelen Mittellinie durch den Mittelpunkt zwischen den Spulenseiten (7a) der mit diesen Kommutatorsegmenten verbundenen Spuleneinheiten vorgerückt ist und wobei jede der Spulenseiten (7a) mit ihren jeweiligen Kommutatorsegmenten über entsprechende Teile der Spulenwicklung, die relativ zu den Spulenseiten abgewinkelt sind, verbunden ist,
dadurch gekennzeichnet,
daß der Scheitel jeder Spuleneinheit in Umfangsrichtung um den vorbestimmten Winkel (Θ) von der zur Drehachse parallelen Mittellinie durch den Mittelpunkt zwischen den Spulenseiten (7a) der Spuleneinheit vorgerückt ist.

2. Rotierende Gleichstrommaschine nach Anspruch 1, wobei die Ankerwicklung schleifengewickelt ist.

3. Rotierende Gleichstrommaschine nach Anspruch 1, wobei der Anker wellengewickelt ist.

## Revendications

1. Machine électrique rotative C.C. comprenant un stator incluant des pôles magnétiques (1), et une armature (2) entraînable en rotation par rapport au stator et incluant un enroulement d'induit (7) comprenant une pluralité de bobines unitaires (A) décalées l'une de l'autre par un angle électrique prédéterminé, et un commutateur (8) ayant une pluralité de segments de commutateur (8a), chacune des bobines unitaires ayant une paire de côtés de bobine (7a) et étant reliées entre deux segments de commutateur ; dans laquelle les bobines unitaires (A) sont positionnées de telle façon par rapport aux segments de commutateur (8a) qu'une ligne centrale parallèle à l'axe de rotation, à travers le point milieu entre les segments de commutateur (8a) auxquels une bobine unitaire (A) est reliée, est circonférentiellement avancée d'un angle prédéterminé (θ) de la ligne centrale parallèle à l'axe de rotation, à travers le point milieu entre les côtés de bobine (7a) de la bobine unitaire reliée à ces segments de commutateur, et chacun des côtés de bobine (7a) sont reliés à leurs segments de commutateur respectifs, via des parties respectives d'enroulement de bobine qui forment un angle par rapport aux côtés de bobine, caractérisée en ce que le sommet de chaque bobine unitaire est circonférentiellement avancé suivant ledit angle prédéterminé (θ) depuis la ligne centrale parallèle à l'axe de rotation à travers le point milieu entre les côtés de bobine (7a) de la bobine unitaire.

2. Machine rotative C.C. selon la revendication 1, dans laquelle l'enroulement d'armature est enroulé à recouvrement.

3. Machine rotative C.C. selon la revendication 1, dans laquelle l'armature est enroulée de façon ondulée.
